# EUROPEAN PATENT APPLICATION

(11) **EP 3 553 872 A1**
(43) Date of publication of application: **16.10.2019**
(21) Application number: 17879536.5
(22) Date of filing: 06.12.2017
(51) Int. Cl.: H01M 10/12

(54) **LEAD STORAGE BATTERY AND METHOD FOR MANUFACTURING SAME**

(30) Priority: 07.12.2016 WO PCT/JP2016/086430
(71) Applicant: Hitachi Chemical Company, Ltd., Chiyoda-ku Tokyo 100-6606 (JP)
(72) Inventor: SEWA Itaru, Tokyo 100-6606 (JP); ISOBE Kosuke, Tokyo 100-6606 (JP); ABE Masayuki, Tokyo 100-6606 (JP); MARUYAMA Kazuya, Tokyo 100-6606 (JP)
(74) Representative: Hoffmann Eitle
(86) International application number: PCT/JP2017/043874
(87) International publication number: WO 2018/105665

(57) **Abstract**

A lead storage battery includes: a battery case including a cell chamber and having an upper surface having an opening; a lid including an electrode terminal and closing the opening; an electrode plate group accommodated in the cell chamber, and including a plurality of electrode plates and a strap connecting the electrode plates having the same polarity among the plurality of electrode plates to each other; and an electrode pole extending in the battery case from the lid, and electrically connecting the strap to the electrode terminal, wherein a clearance (X-Y1) being a difference between a width X of the cell chamber and a thickness Y1 of the electrode plate group in a stacking direction of the plurality of electrode plates is less than 1.2 mm.

## Description

### Technical Field

The present invention relates to a lead storage battery and a method for producing the same.

### Background Art

A lead storage battery is used for various applications such as vehicle engine starters and backup power sources. In particular, a vehicle engine starter lead storage battery supplies electric power to an engine starter motor, and supplies electric power to various electrical devices and electronic devices mounted on a vehicle. In recent years, as measures of environmental protection and improvement in fuel efficiency, for example, the lead storage battery has been considered to be applied to micro hybrid vehicles such as a start-stop vehicle (idling stop vehicles, hereinafter, referred to as an "ISS vehicle") decreasing an engine operating time, and a generation control vehicle reducing the power generation of an alternator due to engine power.

When a lead storage battery is used in a state where the lead storage battery is mounted on a vehicle, the vibration of the vehicle may cause strong vibration to be applied to the lead storage battery. In this case, stress is directly applied to an electrode pole which is one of constituent articles of the lead storage battery, which may cause the electrode pole to be broken. Meanwhile, Patent Literature 1 proposes that a tubular body having electrical resistance lower than that of an electrode pole base material is arranged in an electrode pole made of a lead alloy, which suppresses the occurrence of damage of the electrode pole caused by the vibration.

### Citation List

### Patent Literature

Patent Literature 1: Japanese Unexamined Patent Publication No. 2009-252625

### Summary of Invention

### Technical Problem

However, since the technique disclosed in Patent Literature 1 requires changes in the material and configuration of the electrode pole, which leads to increase in manufacturing costs, a novel technique capable of suppressing the occurrence of damage of the electrode pole without changing the configuration of the electrode pole has been required to be developed.

Then, an object of the present invention is to provide a lead storage battery and a method for producing the same, which can suppress the occurrence of damage of an electrode pole while being vibrated.

### Solution to Problem

A lead storage battery of an aspect of the present invention includes: a battery case including a cell chamber and having an upper surface having an opening; a lid including an electrode terminal and closing the opening; an electrode plate group accommodated in the cell chamber, and including a plurality of electrode plates and a strap connecting the electrode plates having the same polarity among the plurality of electrode plates to each other; and an electrode pole extending in the battery case from the lid, and electrically connecting the strap to the electrode terminal. In the lead storage battery, a clearance (X-Y1) being a difference between a width X of the cell chamber and a thickness Y1 of the electrode plate group in a stacking direction of the plurality of electrode plates is less than 1.2 mm.

The lead storage battery makes it possible to reduce stress to the electrode pole occurring when strong vibration is applied to the lead storage battery, which makes it possible to suppress the occurrence of damage of the electrode pole.

As can be seen from the results of studies by the present inventors, the damage of the electrode pole is particularly apt to occur when vibration is applied to the lead storage battery in the stacking direction of the electrode plate. As one of the causes thereof, strong stress (stress in the peripheral direction of the electrode pole and stress in the stacking direction of the electrode plate) is considered to be applied to the electrode pole by the vibration. Meanwhile, according to the lead storage battery of the present invention, the clearance (X-Y1) is less than 1.2 mm, which makes it possible to suppress the fluttering of the electrode plate group. This is considered to make it possible to reduce the stress to the electrode pole to suppress the occurrence of damage of the electrode pole.

The clearance (X-Y1) may be 0.7 mm or less. In this case, the occurrence of damage of the electrode pole tends to be further suppressed.

A method for producing a lead storage battery of another aspect of the present invention includes the steps of: providing a battery case including a cell chamber and having an upper surface having an opening; providing an electrode plate group including a plurality of electrode plates and a strap connecting the electrode plates having the same polarity among the plurality of electrode plates to each other; providing a lid including an electrode terminal; accommodating the electrode plate group in the cell chamber; and electrically connecting the strap to the electrode terminal via an electrode pole. In this producing method, a clearance (X-Y2) being a difference between a width X of the cell chamber and a thickness Y2 of the electrode plate group in a stacking direction of the plurality of electrode plates is less than 1.2 mm. This producing method can provide the lead storage battery which can suppress the occurrence of damage of the electrode pole while being vibrated.

In the producing method, the electrode plate group may be pressed into the cell chamber by applying a pressure of 1.0 N or more in a direction perpendicular to the opening of the battery case to the electrode plate group when the electrode plate group is accommodated in the cell chamber. In other words, the electrode plate group may be configured such that pressurization at 1.0 N or more is required in a direction perpendicular to the opening of the battery case when the electrode plate group is inserted into the cell chamber. In this case, the electrode plate group in the cell chamber is in a state where a sufficient compressive force is applied in the stacking direction of the electrode plate (the thickness direction of the electrode plate group) from the battery case. Therefore, stress to the electrode pole caused by the vibration of the electrode plate group is further reduced, whereby the occurrence of damage of the electrode pole is further suppressed.

The clearance (X-Y2) may be 0.7 mm or less. In this case, the occurrence of damage of the electrode pole tends to be further suppressed.

In the lead storage battery and the method for producing the same, a resonant frequency of the electrode pole when the lead storage battery is vibrated in the stacking direction of the plurality of electrode plates may be 38 Hz or more. In this case, the occurrence of damage of the electrode pole tends to be further suppressed.

In the lead storage battery and the method for producing the same, maximum acceleration of the electrode pole when the lead storage battery is vibrated by applying an acceleration of 1 G in the stacking direction of the plurality of electrode plates may be 5.5 G or less. In this case, the occurrence of damage of the electrode pole tends to be further suppressed.

In the lead storage battery and the method for producing the same, the electrode plate group may include a sheet-shaped spacer between the adjacent electrode plates. In this case, stress to the electrode pole caused by the vibration of the electrode plate group is further reduced, whereby the occurrence of damage of the electrode pole tends to be further suppressed.

### Advantageous Effects of Invention

According to the present invention, a lead storage battery and a method for producing the same, which can suppress the occurrence of damage of an electrode pole while being vibrated are provided.

### Brief Description of Drawings

Figure 1 is a perspective view showing the entire structure and internal structure of a lead storage battery according to one embodiment.
Figure 2 is a perspective view showing a battery case used for the lead storage battery of Figure 1.
Figure 3 is a sectional view taken along line III-III of Figure 2.
Figure 4 is a perspective view showing an example of an electrode plate group accommodated in a first cell chamber.
Figure 5 is a perspective view showing an example of an electrode plate group accommodated in a second cell chamber.
Figure 6 is a front view of an electrode plate.
Figure 7 is a front view of the electrode plate group of Figure 5 as viewed from the stacking direction of an electrode plate.
Figure 8 shows a bag-like separator and an electrode plate accommodated in the bag-like separator.
Figure 9 (a) shows an example of a separator, and Figure 9 (b) is a sectional view taken along line Ib-Ib of Figure 9 (a).
Figure 10 is a sectional view showing an example of arrangement of a separator, a spacer, and an electrode plate.
Figure 11 (a) shows a step of accommodating an electrode plate group in a cell chamber of a battery case, and Figure 11 (b) shows a state where the electrode plate group is accommodated in the cell chamber of the battery case.

### Description of Embodiments

### <Lead Storage Battery>

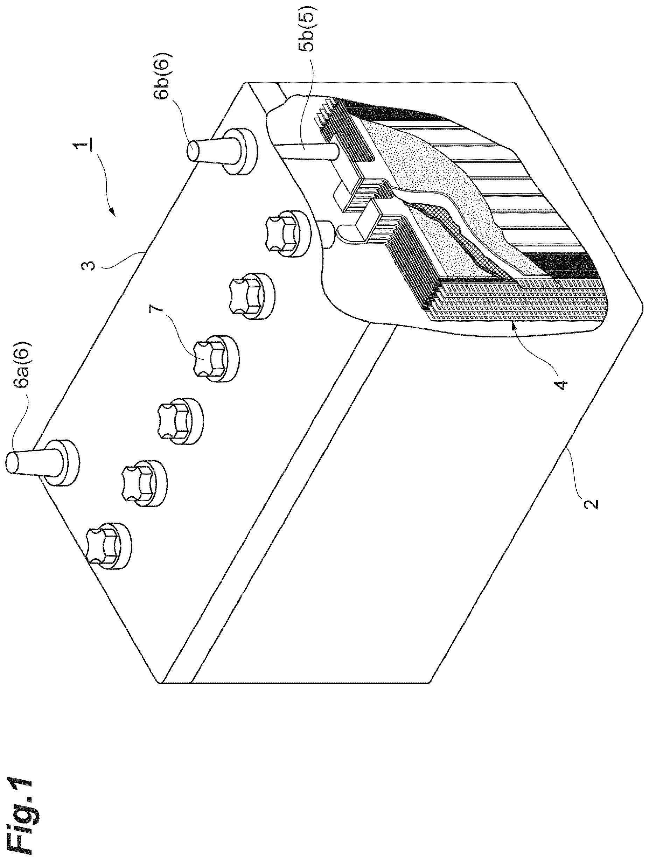

Figure 1 is a perspective view showing the entire structure of a lead storage battery of one embodiment. A lead storage battery 1 shown in Figure 1 is a liquid type lead storage battery. As shown in Figure 1, the lead storage battery 1 according to the present embodiment includes a battery case 2 having an upper surface having an opening, a lid 3 closing the opening of the battery case 2, an electrode plate group 4 and an electrolytic solution (not shown) such as dilute sulfuric acid accommodated in the battery case 2, and an electrode pole 5 (an positive pole and a negative pole 5b) extending in the battery case 2 from the lid 3.

### (Lid)

As shown in Figure 1, the lid 3 includes an electrode terminal 6 (a positive electrode terminal 6a and a negative electrode terminal 6b), and a liquid vent plug 7 closing a liquid injection port formed in the lid 3. The positive electrode terminal 6a is connected to one end of the positive pole (not shown), and the negative electrode terminal 6b is connected to one end of the negative pole 5b. The lid 3 is made of, for example, polypropylene.

### (Battery case)

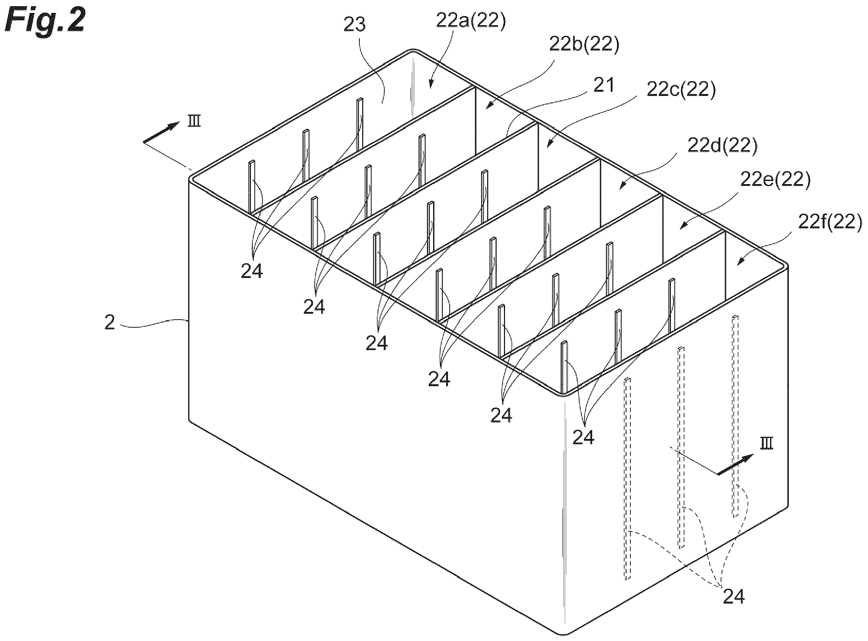

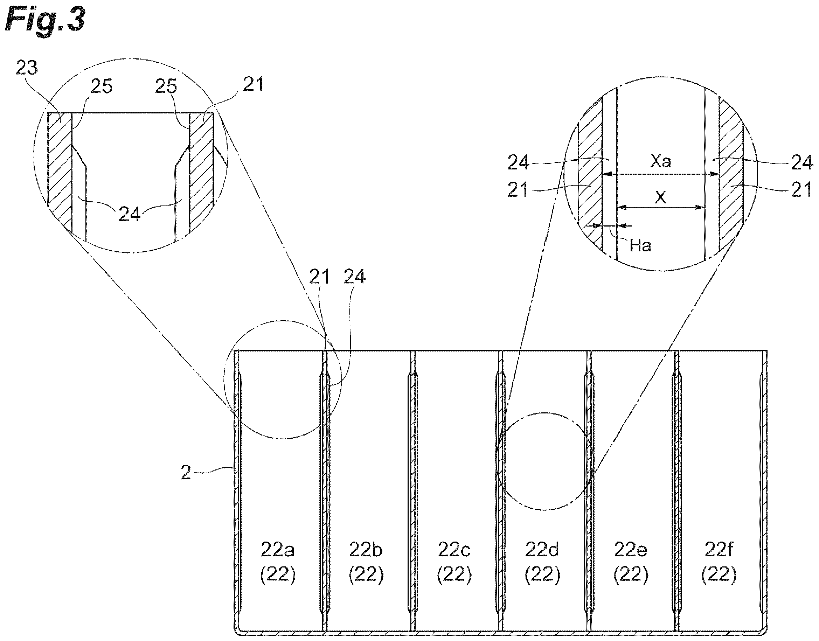

Figure 2 is a perspective view showing a battery case used for the lead storage battery of Figure 1, and Figure 3 is a sectional view taken along line III-III of Figure 2. As shown in Figure 2 and Figure 3, the battery case 2 has a rectangular parallelepiped shape, and includes a rectangular bottom face portion, a pair of longitudinal side surface portions adjacent to a long side portion of the bottom face portion, and a pair of short side surface portions adjacent to a short side portion of the bottom face portion. Hereinafter, a direction along the long side portion of the bottom face portion and a direction along the short side portion of the bottom face portion are a longitudinal direction and transverse direction, respectively, of the battery case 2. The battery case 2 is made of, for example, polypropylene.

The inside of the battery case 2 is divided into six compartments by five partition walls 21, and first to sixth cell chambers 22a to 22f (hereinafter, optionally, collectively referred to as a "cell chamber 22") are formed so as to be arranged along the longitudinal direction of the battery case 2. The cell chamber 22 is a space into which the electrode plate group 4 is inserted. The electrode plate group 4 is accommodated in each cell chamber 22 of the battery case 2 such that the stacking direction of an electrode plate 8 is set to the longitudinal direction of the battery case 2.

As shown in Figure 2 and Figure 3, a plurality of ribs (rib portions) 24 extending in the height direction (a direction perpendicular to an opening surface) of the battery case 2 may be provided on both side surfaces of the partition wall 21, and a pair of inner wall surfaces 23 facing the partition wall 21 of the battery case 2. That is, the partition wall 21 may include a flat portion 25 and a plurality of ribs 24 raised from the flat portion 25 and extending in the height direction of the battery case 2. The rib 24 has a function of appropriately pressurizing (compressing) the electrode plate group inserted into the cell chamber 22 in the stacking direction of the electrode plate 8.

The width X (length in the stacking direction of the electrode plate 8) of each cell chamber 22 can be adjusted by the height of the rib 24, and the like. The widths of the plurality of cell chambers 22 may be the same, or different from each other. Herein, when the partition wall 21 does not include the rib 24, the width X of the cell chamber is defined as a shortest distance between the partition walls 21 facing each other or a shortest distance between the partition wall 21 and the inner wall surface 23 of the battery case 2 facing the partition wall 21 (hereinafter, referred to as a "distance Xa between walls "). When the partition wall 21 and/or the inner wall surface 23 of the battery case 2 include/includes the rib, the width X of the cell chamber is defined as a value obtained by subtracting a height Ha of the highest rib from the distance Xa between walls (see Figure 3). For example, when the heights Ha of the ribs of the two partition walls 21 facing each other are the same, the width X of the cell chamber is [distance Xa between walls]-(2×[height Ha of rib]).

### (Electrode Plate Group)

The electrode plate group 4 is also referred to as a single cell, and has an electromotive force of 2 V. Automobile electrical parts are driven in a state where a direct-current voltage of 12 V is stepped up or stepped down, and six electrode plate groups 4 are connected in series, to provide 2 V×6=12 V. Therefore, when the lead storage battery 1 is used as an automobile electrical part, six cell chambers are required. When the lead storage battery 1 is used for other applications, the number of the cell chambers is not limited to 6.

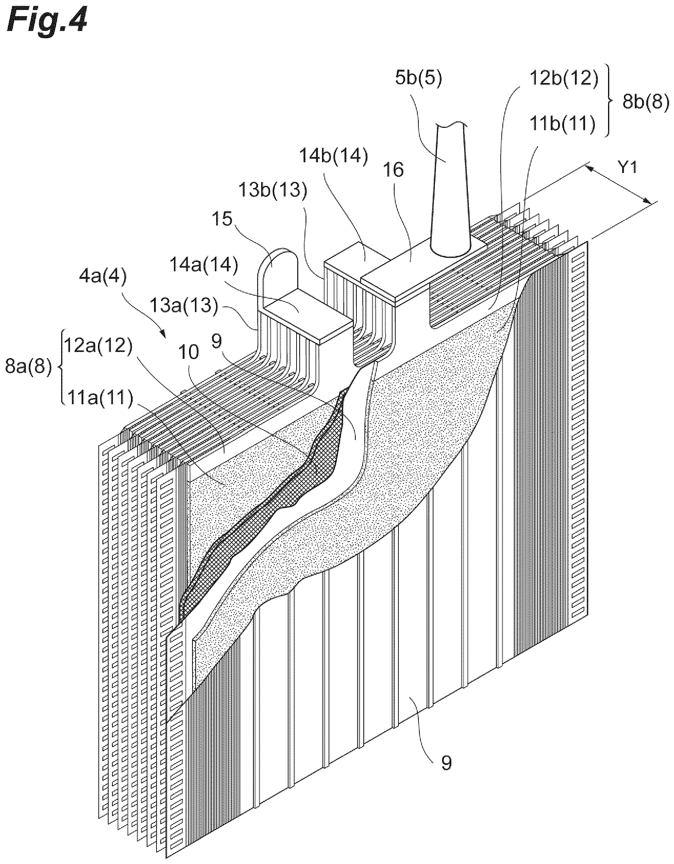

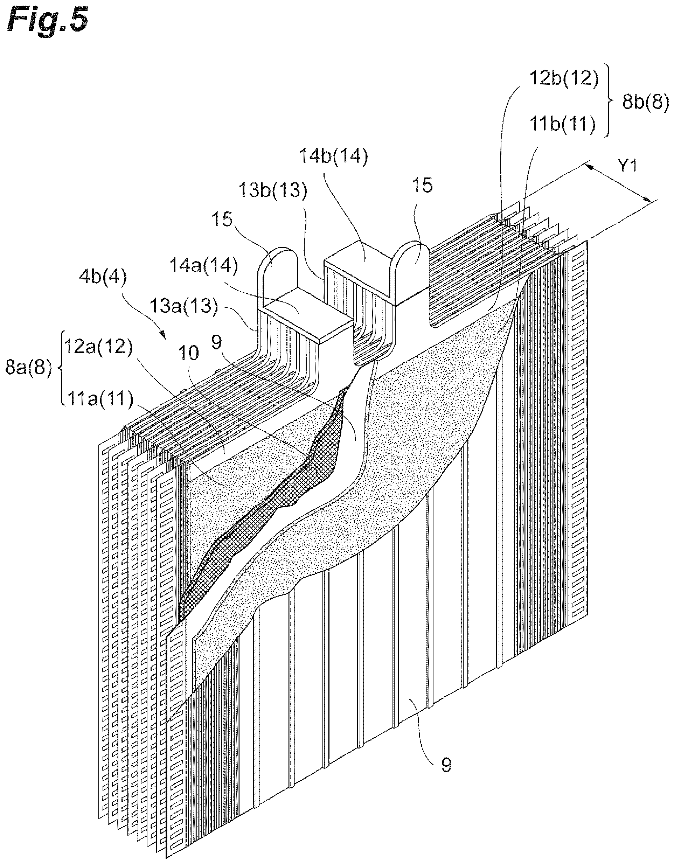

Figure 4 is a perspective view showing a first electrode plate group 4a accommodated in a first cell chamber 22a. Figure 5 is a perspective view showing a second electrode plate group 4b accommodated in a second cell chamber 22b. Hereinafter, with reference to Figure 4 and Figure 5, the configuration of the electrode plate group 4 will be described. Although not shown, a sixth electrode plate group accommodated in a sixth cell chamber 22f has the same structure as that of the first electrode plate group 4a. Third to fifth electrode plate groups accommodated in third to fifth cell chambers 22c, 22d, and 22e have the same configuration as that of the second electrode plate group 4b.

As shown in Figure 4 and Figure 5, the electrode plate group 4 is a stacked body of a plurality of electrode plates 8 (a positive electrode plate 8a and a negative electrode plate 8b), and includes a plate-like positive electrode (positive electrode plate) 8a, a plate-like negative electrode (negative electrode plate) 8b, and a separator 9 and a spacer 10 interposed between the positive electrode plate 8a and the negative electrode plate 8b.

The electrode plate group 4 has a structure where the positive electrode plate 8a and the negative electrode plate 8b are alternately stacked in the longitudinal direction of the battery case 2 with the separator 9 and the spacer 10 interposed therebetween. That is, the positive electrode plate 8a and the negative electrode plate 8b are arranged such that principal surfaces thereof spread in a direction perpendicular to the opening surface of the battery case 2. The electrode plate group 4 has a rectangular shape, wherein the height direction of the battery case 2 is the transverse direction, and the transverse direction of the battery case 2 is the longitudinal direction, as viewed from the stacking direction of the electrode plate 8. The electrode plate 8 is also the same.

The electrode plate 8 (a positive electrode plate 8a and a negative electrode plate 8b) includes an electrode active material filling portion 11 (a positive electrode active material filling portion 11a and a negative electrode active material filling portion 11b), a current collector 12 (a positive electrode current collector 12a and a negative electrode current collector 12b), and an ear portion 13 (a positive electrode ear portion 13a and a negative electrode ear portion 13b) projected from one end of the current collector in the transverse direction. The electrode active material filling portion 11 is made of an electrode active material. That is, the electrode active material configures the electrode active material filling portion 11 in a state where the electrode active material is held by the current collector 12. The current collector 12 configures a conductive path for an electrical current to the electrode active material. Herein, one excluding the positive electrode current collector from the positive electrode plate is referred to as a "positive electrode active material", and one excluding the negative electrode current collector from the negative electrode plate is referred to as a "negative electrode active material".

The current collector 12 and the ear portion 13 are made of, for example, a lead-calcium tin alloy, a lead-calcium alloy, and a lead-antimony alloy. The current collector 12 on which the ear portion 13 is provided can be obtained by forming these lead alloys in a lattice shape by a gravity casting method, an expansion method, and a punching method and the like.

As shown in Figure 4 and Figure 5, the electrode plate group 4 includes a strap 14 (a positive electrode-side strap 14a, a negative electrode-side strap 14b) which connects the electrode plates having the same polarity (the negative electrode plates 8b, the positive electrode plates 8a) to each other. Specifically, the ear portions 13a of the plurality of positive electrode plates 8a are collectively welded to each other by the positive electrode-side strap 14a, and the ear portions 13b of the plurality of negative electrode plates 8b are collectively welded to each other by the negative electrode-side strap 14b. Thereby, the electrode plate group 4 has a thickness (the length of the electrode plate in the stacking direction) Y1. At least one of the positive electrode-side strap 14a and the negative electrode-side strap 14b includes an inter-cell connection portion 15, and is connected to the strap 14 having a different polarity (the positive electrode-side strap 14a or the negative electrode-side strap 14b) in the electrode plate groups 4 accommodated in the cell chambers 22 adjacent to each other with the inter-cell connection portion 15 interposed therebetween. In the first electrode plate group 4a shown in Figure 4, the inter-cell connection portion 15 is provided in the positive electrode-side strap 14a, and the negative electrode-side strap 14b is electrically connected to the negative electrode terminal 6b via the negative pole 5b. Although not shown, in the sixth electrode plate group, the inter-cell connection portion is provided in the negative electrode-side strap, and the positive electrode-side strap is electrically connected to the positive electrode terminal 6a via the positive pole.

The strap 14 has an upper surface (a surface on the opposite side of a surface welded to the ear portion 13) welded to one end of a connecting member 16. Other end of the connecting member 16 is welded to a lower end of the electrode pole 5 (an end on the side of the battery case 2), to electrically connect the strap 14 and the electrode pole 5 to each other. The connecting member 16 has, for example, a plate shape, and is made of lead and/or a lead alloy.

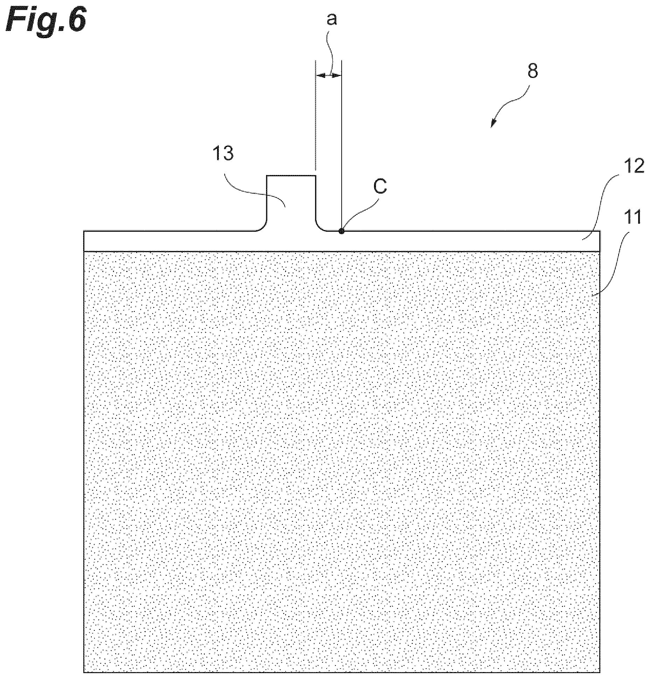

Figure 6 is a front view of the electrode plate 8. The front of the electrode plate is a surface of the electrode plate as viewed from the stacking direction of the electrode plate. As shown in Figure 6, the ear portion 13 of the electrode plate 8 is located on the center side of the electrode plate 8 as viewed from the front of the electrode plate 8. Therefore, the lead storage battery of the present embodiment tends to exhibit excellent charge-discharge characteristics.

The ear portion 13 in the electrode plate 8 (current collector 12) may be provided so as to be projected from one end of the current collector 12 such that a shortest distance a from a center C in the longitudinal direction of the electrode plate 8 (current collector 12) shown in Figure 6 is set to 0 mm or more. The shortest distance a may be 6 mm or less or 0 mm or less from the viewpoint of excellent charge-discharge characteristics. The shortest distance a is obtained by measuring a shortest distance between a point C located at the center of the current collector 12 in the longitudinal direction and located on one end of the current collector 12 in the transverse direction and the root of the ear portion 13 (a connection portion between the ear portion 13 and the current collector 12).

A thickness Y1 of the above-described electrode plate group 4 is not particularly limited, and can be adjusted by the thickness of the electrode plate 8 (the negative electrode plate 8b and the positive electrode plate 8a), the thickness of the separator 9, the thickness of the spacer 10, and a distance between electrode plates, and the like. Herein, the thickness Y1 of the electrode plate group means the thickness of the electrode plate group in a state where a compressive force from the battery case 2 is not applied to the electrode plate group 4, and means the thickness of the electrode plate group after formation.

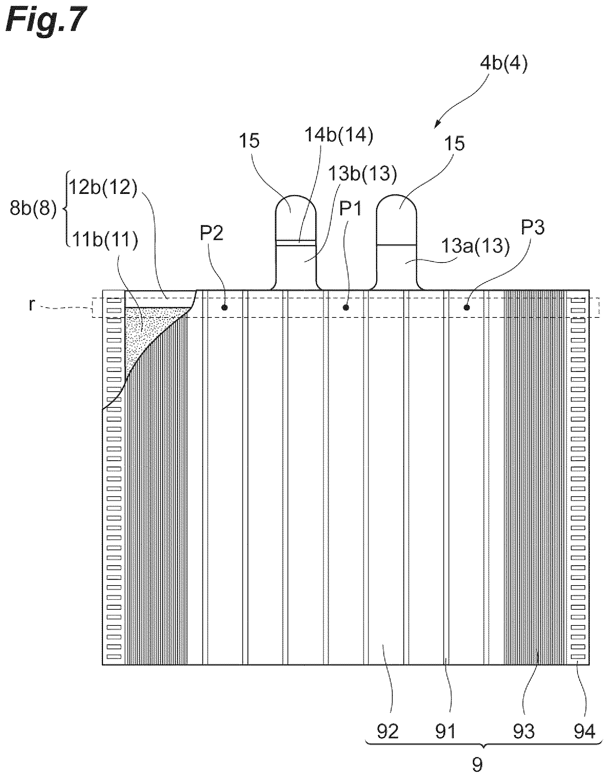

A method for measuring the thickness Y1 of the electrode plate group 4 will be specifically described with reference to Figure 7. Figure 7 is a front view of the electrode plate group 4 as viewed from the stacking direction of the electrode plate 8. The thickness of the electrode plate group 4 is defined as the average value of the thicknesses of the electrode plate group 4 measured at a total of three points, i.e., one point at a center P1 of the electrode plate group 4 in the longitudinal direction, one point at an optional position P2 on the right side of the center, and one point at an optional position P3 on the left side of the center in a range r of ±3 mm in the transverse direction from a boundary between the electrode active material filling portion 11 (in Figure 7, the negative electrode active material filling portion 11b) of the outermost electrode plate 8 of the electrode plate group 4 (in Figure 7, the negative electrode plate 8b) and a frame portion located on the ear portion side of the current collector included in the electrode plate. Herein, as shown in Figure 7, in the case of the configuration in which the separator is arranged outermost in the electrode plate group 4, the height of a rib 91 of the separator is not included in the thickness of the electrode plate group 4. That is, in the case of the configuration in which the separator 9 is arranged outermost in the electrode plate group 4, the thickness of the electrode plate group 4 is measured at the position of a portion (base portion) 92 supporting the rib 91 in the separator 9. However, in the case where a rib 42 of the separator arranged outermost in the electrode plate group 4 is in contact with a partition wall 51 or an inner wall surface 50 of the battery case 2 such as the case where the partition wall 51 of the battery case 2 does not include a rib 53, a height H of the rib 42 is included in the thickness of the electrode plate group. For example, the thickness Y1 of the electrode plate group 4 in the lead storage battery after formation can be measured after taking out the electrode plate group 4 after formation, washing the electrode plate group 4 with water for 1 hour, and sufficiently drying the electrode plate group 4 from which sulfuric acid has been removed, in a system in which no oxygen is present.

From the viewpoint of being capable of suppressing permeation short circuit, a distance between the negative electrode plate 8b and the positive electrode plate 8a adjacent to each other with the separator 9 interposed therebetween (distance between electrode plates) in the electrode plate group 4 is preferably 0.4 mm or more, more preferably 0.5 mm or more, and still more preferably 0.55 mm or more. From the viewpoint that the occurrence of damage of the electrode pole is further suppressed, the distance between electrode plates is preferably 0.8 mm or less, more preferably 0.75 mm or less, still more preferably 0.7 mm or less, yet still more preferably 0.65 mm or less, and particularly preferably 0.6 mm or less. From these viewpoints, the distance between electrode plates is preferably 0.4 to 0.8 mm, more preferably is 0.4 to 0.75 mm, still more preferably 0.5 to 0.7 mm, yet still more preferably 0.55 to 0.65 mm, and particularly preferably 0.55 to 0.6 mm. The distance between electrode plates means a distance between electrode plates in a state where a compressive force from the battery case 2 is not applied to the electrode plate group 4.

When the electrode plate 8 and the separator 9 are in contact with each other, and when the electrode plate 8 and the spacer 10 are in contact with each other, for example, all the separators 9 and spacers 10 are extracted from the electrode plate group 4. Regarding each of all the extracted separators 9 and spacers 10, a thickness is measured at a place of about 8 mm from the upper ends of the separator 9 and spacer 10 (end portions on the side of the ear portion in the transverse direction) toward the lower ends (end portions on the opposite side of the ear portion in the transverse direction). The sum of the average value of the measured values of the separators 9 and the average value of the measured values of the spacers 10 can be taken as the distance between electrode plates. When the separator 9 includes the rib 91, the thickness of the separator 9 is the sum of the thickness of the base portion 92 and the height of the rib 91. For example, the average value of thicknesses measured at a total of three points, i.e., on two ribs arranged outermost among the plurality of ribs 91 formed in the longitudinal direction of the separator 9, and one rib arranged at the middle point of the two ribs is taken as the thickness of the separator 9. When the separator 9 does not include the rib 91, the average value of thicknesses measured at a total of three points, i.e., a center of the separator 9 in the longitudinal direction, one point at an optional position on the right side of the center, and one point at an optional position on the left side of the center is taken as the thickness of the separator 9. When the separator 9 is a bag-like separator, the separator 9 is developed to measure a thickness. A distance between electrode plates in a state where a compressive force is not applied to the electrode plate group 4 in the lead storage battery 1 after formation can be measured by the method after taking out the electrode plate group 4 from the lead storage battery 1 after formation, washing the electrode plate group 4 with water for 1 hour, and sufficiently drying the electrode plate group 4 from which an electrolytic solution (for example, sulfuric acid) has been removed, in a system in which no oxygen is present.

In the lead storage battery 1 according to the present embodiment, a difference (clearance: X-Y1) between the width X (unit: mm) of the cell chamber 22 and the thickness Y1 (unit: mm) of the electrode plate group 4 in the battery case 2 is less than 1.2 mm. In the present embodiment, the clearance (X-Y1) is less than 1.2 mm, which makes it possible to reduce stress to the electrode pole occurring when the lead storage battery is vibrated, to allow the occurrence of damage of the electrode pole to be suppressed. From the viewpoint that the effect is remarkable, the clearance (X-Y1) is preferably 0.9 mm or less, more preferably 0.7 mm or less, still more preferably 0.6 mm or less, yet still more preferably 0.4 mm or less, particularly preferably 0 mm or less, particularly more preferably less than 0 mm, and extremely preferably -0.4 mm or less. The clearance (X-Y1) may be -1.0 mm or more, -0.4 mm or more, 0 mm or more, or 0.4 mm or more, from the viewpoint capable of suppressing short circuit. From these viewpoints, the clearance (X-Y1) may be -1.0 mm or more and less than 1.2 mm, -1.0 to 0.9 mm, -1.0 to 0.7 mm, -1.0 to 0.6 mm, -1.0 to 0.4 mm, -1.0 to 0 mm, -1.0 mm or more and less than 0 mm, -1.0 to -0.4 mm, -0.4 mm or more and less than 1.2 mm, -0.4 to 0.9 mm, -0.4 to 0.7 mm, -0.4 to 0.6 mm, -0.4 to 0.4 mm, -0.4 to 0 mm, -0.4 mm or more and less than 0 mm, 0 mm or more and less than 1.2 mm, 0 to 0.9 mm, 0 to 0.7 mm, 0 to 0.6 mm, 0 to 0.4 mm, 0.4 mm or more and less than 1.2 mm, 0.4 to 0.9 mm, 0.4 to 0.7 mm, or 0.4 to 0.6 mm.

In the present embodiment, from the reason of the clearance (X-Y1) being less than 1.2 mm, and the like, when the electrode plate group 4 is inserted into the cell chamber 22, pressurization at 1.0 N or more is required in a direction perpendicular to the opening of the battery case 2. In other words, the electrode plate group 4 is configured such that pressurization at 1.0 N or more is required in the direction perpendicular to the opening of the battery case 2 when the electrode plate group 4 is inserted into the cell chamber. From the viewpoints of capable of reducing acceleration while being vibrated, and of further suppressing the occurrence of damage of the electrode pole, the electrode plate group 4 may be configured such that pressurization at 5.0 N or more or 11.0 N or more is required in the direction perpendicular to the opening of the battery case 2 when the electrode plate group 4 is inserted into the cell chamber. The electrode plate group 4 before being inserted into the cell chamber 22 is an unformed electrode plate group.

Next, the separator 9 and the spacer 10 which configure the electrode plate group 4 will be described.

### [Separator]

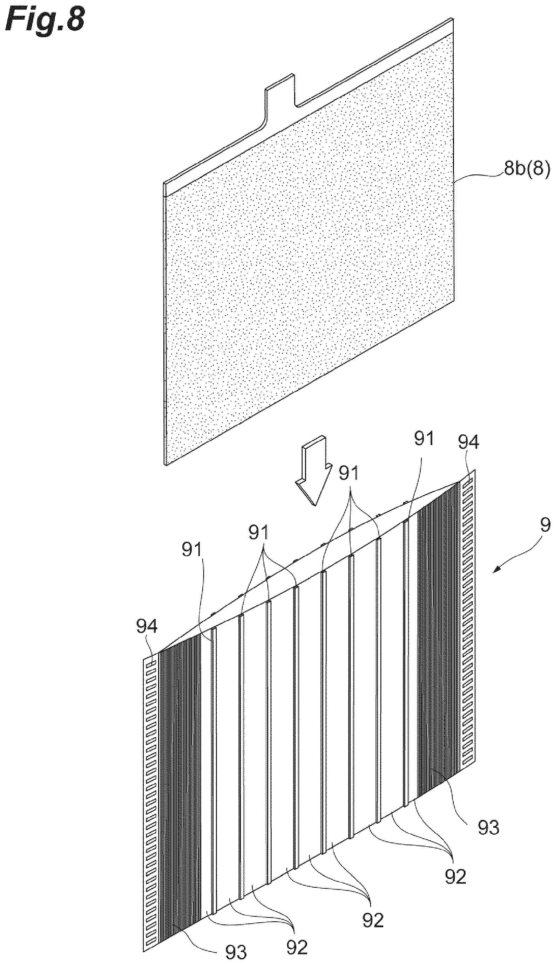

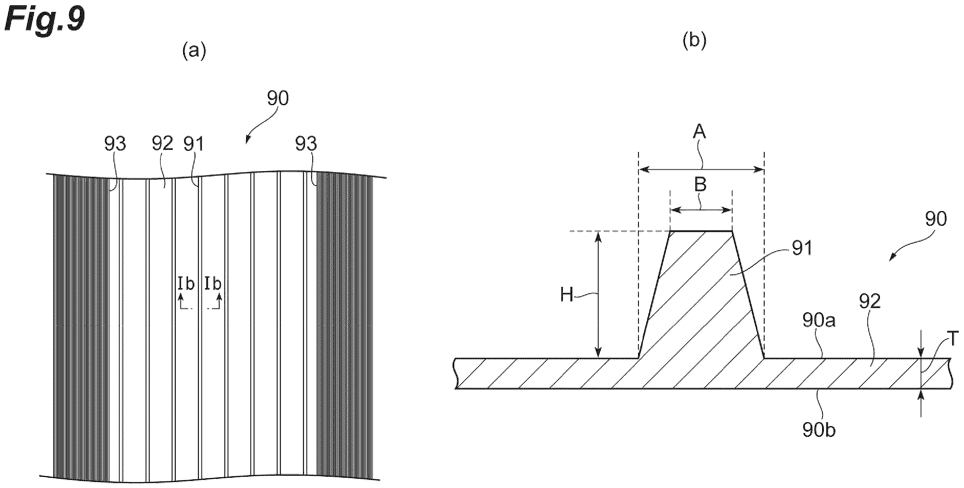

The separator 9 according to the present embodiment may contain at least one material selected from the group consisting of glass, pulp, and a synthetic resin, for example. The separator 9 according to the present embodiment may be a separator having flexibility. Also in the separator 9, from the viewpoint of being capable of further suppressing short circuit and from the viewpoint of having flexibility to provide easy compression of the electrode plate group 4, it is preferable to use a synthetic resin. Furthermore, also in the synthetic resin, polyolefin (for example, polyethylene) is particularly preferable. Hereinafter, the separator 9 of the present embodiment will be described using Figure 8 and Figure 9.

Figure 8 shows the separator 9 of the present embodiment and the electrode plate 8 (for example, the negative electrode plate 8b) accommodated in the separator 9 of the present embodiment. As shown in Figure 8, in the present embodiment, the separator 9 has a bag-like shape, and the negative electrode plate 8b is accommodated in the bag-like separator 9.

Figure 9 (a) is a front view showing a separator 90 used for production of the bag-like separator 9, and Figure 9 (b) is a sectional view of the separator 90. The separator 90 is formed in a long sheet shape as shown in Figure 9 (a) and Figure 9 (b). The separator 90 includes a plate-like base portion 92, a plurality of convex (for example, linear) ribs 91, and mini ribs 93. The base portion 92 supports the ribs 91 and the mini ribs 93. When the separator 90 includes the ribs 91, it is possible to more strictly set the distance between electrode plates, and to improve contact properties between the surface of the electrode plate and the electrolytic solution. A plurality of (a large number of) ribs 91 are formed so as to extend in the longitudinal direction of the separator 90 at the center of the separator 90 in the transverse direction. The plurality of ribs 91 are arranged substantially parallel to each other on one surface 90a of the separator 90. An interval between the ribs 91 is, for example, 3 to 15 mm. One ends of the ribs 91 in the height direction are integrated with the base portion 92. A rib is not arranged on other surface 90b of the separator 90, and the other surface 90b of the separator 90 is a flat surface.

A plurality of (a large number of) mini ribs 93 are formed so as to extend in the longitudinal direction of the separator 90 on both sides of the separator 90 in the transverse direction. When the lead storage battery 1 is vibrated in a cross direction (the stacking direction of the electrode plate 8, the longitudinal direction of the battery case 2), the mini ribs 93 has a function of increasing the strength of the separator in order to prevent the corner of the electrode from piercing the separator to cause short circuit. The height, width, and interval of the mini rib 93 are preferably smaller than those of the rib 91. The cross-sectional shape of the mini rib 93 may be the same as, or different from that of the rib 91. The cross-sectional shape of the mini rib 93 is preferably a semicircular shape. The mini rib 93 may not be formed in the separator 90.

A thickness T of the base portion 92 may be 0.25 mm or less, 0.2 mm or less, or 0.15 mm or less, from the viewpoint of preventing short circuit between the positive electrode plate and the negative electrode plate and from the viewpoint of obtaining excellent charge acceptance properties and discharge characteristics. The thickness T of the base portion 92 may be 0.05 mm or more, or 0.1 mm or more from the viewpoint of being likely to adjust the clearance (X-Y1) to the above-described range and from the viewpoint of an excellent suppressing effect of short circuit.

From the viewpoint of suppressing the oxidation degradation of the base portion caused by the positive electrode plate and from the viewpoint of obtaining excellent charge acceptance properties, the height H of the rib 91 is preferably 1.25 mm or less, more preferably 1.0 mm or less, and still more preferably 0.75 mm or less. The height H of the rib 91 is, for example, 0.3 mm or more, and may be 0.4 mm or more or 0.5 mm or more, from the viewpoint of being likely to adjust the clearance (X-Y1) to the above-described range and from the viewpoint of suppressing the oxidation degradation of the positive electrode.

The thickness of a portion of the separator 90 on which the rib 91 is provided (the total of the thickness H of the base portion 92 and the height T of the rib 91) is, for example, 0.4 to 0.75 mm, and may be 0.4 to 0.7 mm, 0.4 to 0.65 mm, 0.4 to 0.6 mm, 0.5 to 0.75 mm, 0.55 to 0.75 mm, 0.6 to 0.75 mm, or 0.6 to 0.7 mm.

A ratio H/T of the height H of the rib 91 to the thickness T of the base portion 92 may be 2 or more, 2.4 or more, or 3 or more, from the viewpoint of obtaining excellent charge acceptance properties, and from the viewpoint of excellent oxidation resistance of the separator. It is inferred that, when the ratio H/T is 2 or more, a portion which is not in contact with the electrode plate 8 (for example, the positive electrode plate 8a) can be sufficiently secured, whereby the oxidation resistance of the separator is improved. The ratio H/T may be 6 or less, 5 or less, 4.5 or less, or 4 or less, from the viewpoint of obtaining excellent charge acceptance properties, from the viewpoint of excellent shape retainability of the rib, and from the viewpoint of an excellent suppressing effect of short circuit. It is inferred that, since a distance between the positive electrode plate 8a and the negative electrode plate 8b is sufficient when the ratio H/T is 6 or less, short circuit is suppressed. It is inferred that, when the ratio H/T is 6 or less, battery characteristics such as charge acceptance properties are satisfactorily maintained without the rib being damaged while the lead storage battery 1 is assembled.

From the viewpoints of excellent shape retainability and oxidation resistance of the rib, an upper base width B of the rib 91 shown in Figure 9 (b) may be 0.1 mm or more or 0.2 mm or more, and may be 2 mm or less, 1 mm or less, or 0.8 mm or less. The upper base width B of the rib 91 may be, for example, 0.2 to 0.8 mm, 0.1 to 2 mm, 0.2 to 1 mm, or 0.2 to 0.8 mm.

From the viewpoint of excellent shape retainability of the rib, a lower base width A of the rib 91 shown in Figure 9 (b) may be 0.2 mm or more, 0.3 mm or more, or 0.4 mm or more, and may be 4 mm or less, 2 mm or less, or 1 mm or less. The lower base width A of the rib 91 may be, for example, 0.2 to 4 mm, 0.3 to 2 mm, or 0.4 to 1 mm.

From the viewpoint of excellent shape retainability of the rib, a ratio (B/A) between the upper base width B and the lower base width A may be 0.1 or more, 0.2 or more, or 0.3 or more, and may be 1 or less, 0.8 or less, or 0.6 or less. The ratio (B/A) may be, for example, 0.1 to 1, 0.2 to 0.8, or 0.3 to 0.6.

An example of a method for producing the bag-like separator 9 using the separator 90 will be described later. First, the above-described separator 90 is cut to a suitable length, and the cut separator 90 is bent into a U-shape or a V-shape near a center in a longitudinal direction on a surface of the separator 90 on which the rib 91 is not provided to obtain a stacking sheet. Then, both side portions of the stacking sheet are subjected to mechanical sealing to form a mechanically sealed portion 94. Thereby, the bag-like separator 9 shown in Figure 8 is obtained. Pressure bonding or thermal welding may be performed in place of the mechanical sealing.

A method for arranging the electrode plate 8 in the obtained bag-like separator 9 may be a method for arranging an electrode plate before both the side portions of the stacking sheet are subjected to mechanical sealing, pressure bonding, or thermal welding. From the viewpoint of excellent productivity, it is preferable to previously produce a bag-like separator 9, and then arrange an electrode plate in the bag-like separator 9.

### [Spacer]

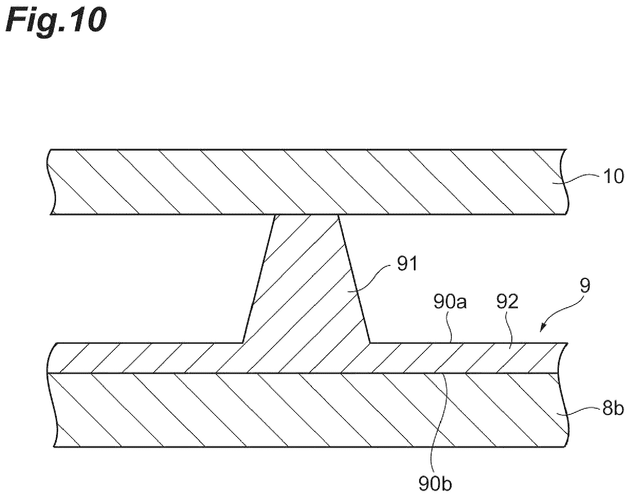

The spacer 10 is provided between the positive electrode plate 8a and the separator 9. In the present embodiment, the electrode plate group 4 includes the spacer 10, whereby stress to the electrode pole caused by the vibration of the electrode plate group can further be reduced, which makes it possible to further suppress the occurrence of damage of the electrode pole. Figure 10 is a sectional view showing arrangement of the bag-like separator 9, spacer 10, and electrode plate 8 in the electrode plate group 4. As shown in Figure 10, in the electrode plate group 4, other end of the rib 91 in the height direction is in contact with the spacer 10. The base portion 92 faces the spacer 10 in the height direction of the rib 91. The other surface 90b of the separator 9 faces, or is in contact with the negative electrode plate 8b.

The spacer 10 is formed in, for example, a sheet shape. The spacer 10 is, for example, a porous membrane, and for example, a nonwoven fabric. A constituent material of the spacer 10 is not particularly limited as long as it is a material having resistance to an electrolytic solution. Specific examples of the constituent material of the spacer 10 include an organic fiber, an inorganic fiber, pulp, and inorganic oxide powder. As the constituent material of the spacer 10, a mixed fiber containing an inorganic fiber and pulp may be used, and an organic-inorganic mixed fiber containing an organic fiber and an inorganic fiber may be used. Examples of the organic fiber include a polyolefin fiber (a polyethylene fiber, a polypropylene fiber, and the like), and a polyethylene terephthalate fiber. Examples of the inorganic fiber include a glass fiber. From the viewpoint of further reducing the stress to the electrode pole caused by the vibration of the electrode plate group, the spacer 10 is preferably a glass mat formed by fabricating a glass fiber into a felt shape. Examples of the glass fiber include a chopped strand and a milled fiber. The glass mat may contain only a glass fiber, or may contain other material (for example, the above-described organic fiber and the like) other than the glass fiber.

The thickness of the spacer 10 may be 0.1 mm or more, 0.5 mm or more, or 1.0 mm or more, from the viewpoint of further reducing the stress to the electrode pole. The thickness of the spacer 10 may be 2.0 mm or less and 1.0 mm or less, and may be 0.5 mm or less, from the viewpoint that excellent charge-discharge characteristics is likely to be obtained.

### (Electrode Pole)

Examples of the composition of the electrode pole include, but are not particularly limited to, an alloy containing lead, Sb, As, and the like (for example, a lead alloy). The shape of the electrode pole may be, for example, a cylindrical shape or a cone shape.

The height of the electrode pole 5 (the length in a direction in which the electrode pole 5 extends) may be 100 mm or less, 90 mm or less, or 70 mm or less, from the viewpoint that the occurrence of damage of the electrode pole is further suppressed. The height of the electrode pole 5 may be 50 mm or more, 60 mm or more, or 80 mm or more, from the viewpoint of connection to terminals 6a and 6b from the electrode plate group.

The lead storage battery 1 of the present embodiment having the above configuration can suppress the occurrence of damage of the electrode pole while being vibrated. In particular, as compared with a conventional lead storage battery, the occurrence of damage of the electrode pole when vibration is applied in the stacking direction of the electrode plate tends to be suppressed.

In the lead storage battery 1 of the present embodiment, even if the lead storage battery 1 is vibrated in the stacking direction of the electrode plate 8 (the thickness direction of the electrode plate group 4), the electrode pole 5 is less likely to resonate. The resonant frequency of the electrode pole 5 when the lead storage battery 1 is vibrated in the stacking direction of the electrode plate 8 (the thickness direction of the electrode plate group 4) is, for example, 38 Hz or more. In the present embodiment, the clearance (X-Y1) can be adjusted to set the resonant frequency of the electrode pole 5 to 38 Hz or more. From the viewpoint of further suppressing the occurrence of damage of the electrode pole, the resonant frequency of the electrode pole 5 may be 38 Hz or more, and may be 40 Hz or more. The resonant frequency of the electrode pole 5 may be 75 Hz or less or 60 Hz or less, from the viewpoint that resonance is likely to converge, which is less likely to cause the damage of the electrode pole. From these viewpoints, the resonant frequency of the electrode pole 5 may be 38 to 75 Hz, 38 to 60 Hz, 40 to 75 Hz, or 40 to 60 Hz.

In the lead storage battery 1 of the present embodiment, even if the electrode pole 5 resonates when the lead storage battery 1 is vibrated in the stacking direction of the electrode plate 8 (the thickness direction of the electrode plate group 4), the maximum acceleration of the electrode pole 5 during resonating can be sufficiently reduced. The maximum acceleration of the electrode pole 5 when an acceleration of 1 G is applied in the stacking direction of the electrode plate 8 (the thickness direction of the electrode plate group 4) to vibrate the lead storage battery 1 is, for example, 5.5 G or less. In the present embodiment, the clearance (X-Y1) can be adjusted to set the maximum acceleration of the electrode pole 5 to less than 5.5 G. From the viewpoint of further suppressing the occurrence of damage of the electrode pole, the maximum acceleration of the electrode pole 5 may be 4.1 G or less, and may be 3.6 G or less. In consideration of external vibration, and resonating properties of the accommodated electrode plate group, the maximum acceleration of the electrode pole 5 is, for example, 1.0 G or more, 3.6 G or more, or 4.1 G or more. From these viewpoints, the maximum acceleration of the electrode pole 5 may be 1.0 to 5.5 G, 1.0 to 4.1 G, 1.0 to 3.6 G, 3.6 to 4.1 G, 3.6 to 5.5 G, or 4.1 to 5.5 G.

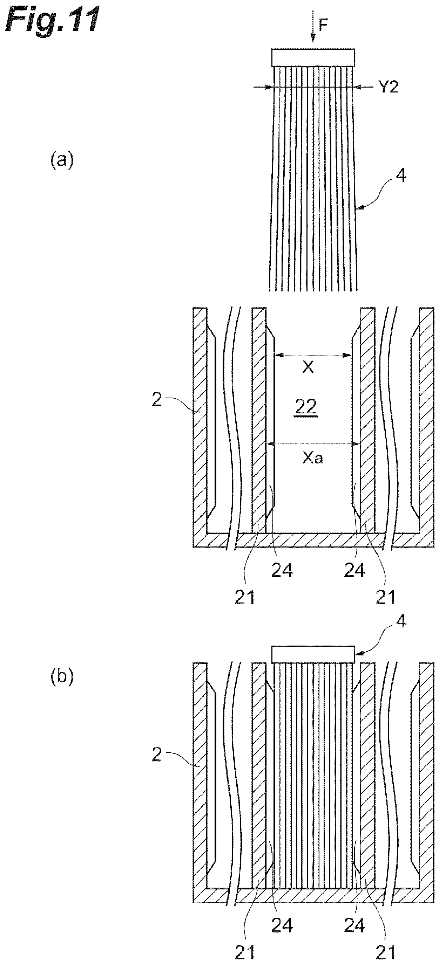

A method for producing the lead storage battery of the present embodiment described above includes, for example, the steps of: providing the above-described battery case 2, electrode plate group 4 (unformed electrode plate group), lid 3, electrode pole 5, and connecting member 16; accommodating the electrode plate group 4 in the cell chamber 22 of the battery case 2; electrically connecting the strap 14 of the electrode plate group 4 (the positive electrode-side strap 14a and the negative electrode-side strap 14b) to the electrode terminal 6 (the positive electrode terminal 6a and the negative electrode terminal 6b) via the electrode pole 5 (the positive pole and the negative pole 5b); closing the opening of the battery case 2 with the lid 3; supplying the electrolytic solution into the battery case 2; and forming the unformed battery after supplying the electrolytic solution. In this producing method, as shown in Figure 11 (a) and Figure 11 (b), a clearance (X-Y2) being a difference between the width (the length of the electrode plate in the stacking direction) X (unit: mm) of the cell chamber 22 and the thickness Y2 (unit: mm) of the electrode plate group 4 (the unformed electrode plate group) is less than 1.2 mm. A method for measuring the thickness Y2 of the unformed electrode plate group is the same as that of the method for measuring the thickness Y1 of the electrode plate group after formation.

The step of providing the electrode plate group 4 may include, for example, an electrode plate producing step of obtaining an unformed electrode plate (an unformed positive electrode plate and an unformed negative electrode plate), and a step of stacking the bag-like separator 9 in which the unformed negative electrode plate obtained in the electrode plate producing step is arranged, the spacer 10, and the unformed positive electrode plate in this order, and connecting the ear portion 13 of the electrode plate having the same polarity with the strap 14 (welding and the like) to obtain the electrode plate group 4. In the electrode plate producing step, for example, the current collector 12 (for example, a current collector lattice such as a casting lattice body or an expanded lattice body) is filled with an electrode active material paste (a positive electrode active material paste and a negative electrode active material paste), and aging and drying are then performed to obtain the unformed electrode plate.

The electrode active material paste contains, for example, raw materials of the electrode active material (lead powder and the like), and may further contain other additive agents. The electrode active material paste is obtained by, for example, adding an additive agent (a reinforcement short fiber and the like) and water to raw materials of the electrode active material, and thereafter adding dilute sulfuric acid, followed by kneading.

The step of accommodating the electrode plate group 4 in the cell chamber 22 of the battery case 2 is preferably a step of applying a pressure of 1.0 N or more in the direction perpendicular to the opening of the battery case 2 to the electrode plate group 4 when the electrode plate group 4 is accommodated in the cell chamber 22 to press the electrode plate group 4 into the cell chamber 22 as shown in Figure 11 (a) and Figure 11 (b). This makes it possible to accommodate the electrode plate group 4 in the battery case 2 while applying a compressive force in the stacking direction of the electrode plate 8 (the thickness direction of the electrode plate group 4) to the electrode plate group 4 from the battery case 2 (for example, the partition wall 21).

According to the findings of the present inventors, when the clearance (X-Y2) is 1.2 mm or more, the electrode plate group 4 can be dropped into the cell chamber 22 of the battery case 2 by its own weight without pressing the electrode plate group 4. When the clearance (X-Y2) is smaller than 1.2 mm, it is necessary to apply pressure F to the electrode plate group 4 to press the electrode plate group 4 into the cell chamber 22 of the battery case 2. It is inferred that the reason why the electrode plate group 4 needs to be pressed into the cell chamber 22 of the battery case 2 even when the clearance (X-Y2) is a positive value is that the electrode plate group 4 has a structure spreading to below as shown in Figure 11 (a), although the reason is not clear.

In the present embodiment, the clearance (X-Y2) is preferably 0.9 mm or less, more preferably 0.7 mm or less, still more preferably 0.6 mm or less, yet still more preferably 0.4 mm or less, particularly preferably 0 mm or less, particularly more preferably less than 0 mm, and extremely preferably -0.4 mm or less. The clearance (X-Y2) may be -1.0 mm or more, -0.4 mm or more, 0 mm or more, or 0.4 mm or more from the viewpoint of being capable of suppressing short circuit. From these viewpoints, the clearance (X-Y2) may be -1.0 mm or more and less than 1.2 mm, -1.0 to 0.9 mm, -1.0 to 0.7 mm, -1.0 to 0.6 mm, -1.0 to 0.4 mm, -1.0 to 0 mm, -1.0 mm or more and less than 0 mm, -1.0 to -0.4 mm, -0.4 mm or more and less than 1.2 mm, -0.4 to 0.9 mm, -0.4 to 0.7 mm, -0.4 to 0.6 mm, -0.4 to 0.4 mm, -0.4 to 0 mm, -0.4 mm or more and less than 0 mm, 0 mm or more and less than 1.2 mm, 0 to 0.9 mm, 0 to 0.7 mm, 0 to 0.6 mm, 0 to 0.4 mm, 0.4 mm or more and less than 1.2 mm, 0.4 to 0.9 mm, 0.4 to 0.7 mm, or 0.4 to 0.6 mm. The method for measuring the thickness Y2 of the unformed electrode plate group is the same as that of the method for measuring the thickness Y1 of the electrode plate group after formation.

In the step of electrically connecting the strap 14 of the electrode plate group 4 to the electrode terminal 6 via the electrode pole 5, the electrode pole 5, and the strap 14 connecting the ear portion having the same polarity as that of the electrode terminal 6 to which the electrode pole 5 is connected are electrically connected via the connecting member 16. The connecting member 16 and the electrode pole 5, and the connecting member 16 and the strap 14 may be joined by welding (for example, penetration welding).

In the step of supplying the electrolytic solution into the battery case 2, the electrolytic solution is supplied (injected) into the battery case 2 of the unformed battery obtained by the step of accommodating the electrode plate group 4 in the cell chamber 22 of the battery case 2.

The step of forming the unformed battery may be, for example, a step of supplying the electrolytic solution, and then applying a direct current to perform battery case formation. After formation, the specific gravity of the electrolytic solution may be adjusted to a suitable specific gravity. Thereby, the formed lead storage battery (liquid type lead storage battery) 1 is obtained.

The formation condition, and the specific gravity of sulfuric acid can be adjusted according to the aspect of the electrode active material. The formation treatment is not limited to implementation after obtaining the unformed battery, and may be implemented after aging and drying in the electrode producing step (tank formation).

As described above, one embodiment of the lead storage battery and the method for producing the same of the present embodiment has been described, but the present invention is not limited to the embodiment.

For example, the lead storage battery according to the present embodiment is the liquid type lead storage battery, but the lead storage battery may be, for example, a control valve type lead storage battery, and a closed-type lead storage battery and the like.

The number of the positive electrode plates 8a and the number of the negative electrode plates 8b in the electrode plate group 4 shown in Figure 4 and Figure 5 are 6 and 7, respectively, but the number of the positive electrode plates and the number of the negative electrode plates may be, for example, 7 and 8, 8 and 8, or 8 and 9, respectively. As the number of the positive electrode plates and the number of the negative electrode plates increase, cycle lifetime characteristics (for example, ISS cycle performance) tend to be improved.

As shown in Figure 4 and Figure 5, in the embodiment, the negative electrode plate 8b is accommodated in the bag-like separator 9, but the positive electrode plate 8a may be accommodated in the bag-like separator 9. When the bag-like separator 9 is applied to the positive electrode plate 8a, the elongation of the positive electrode current collector 12a may cause the positive electrode plate 8a to penetrate the separator 9, whereby the negative electrode plate 8b is preferably accommodated in the bag-like separator 9. The separator 9 of the embodiment includes the convex ribs 91 and 93, but the separator 9 may include no convex ribs 91 and 93.

As shown in Figure 4 and Figure 5, in the embodiment, the spacer 10 is arranged between the positive electrode plate 8a and the separator 9, but the spacer 10 may be arranged between the negative electrode plate 8b and the separator 9. The number of the spacers 10 may be 2 or more, or 0. When the spacer 10 is not provided between the separator 9 and the positive electrode plate 8a, the other end of the rib 91 in the height direction may be in contact with the positive electrode plate 8a, and the other surface 90b of the separator 9 may face or be in contact with the negative electrode plate 8b. The other end of the rib 91 in the height direction may be in contact with the negative electrode plate 8b, and the other surface 90b of the separator 9 may face or be in contact with the spacer 10 or the positive electrode plate 8a.

### Examples

Hereinafter, the present invention will be specifically described in with reference to Examples. However, the present invention is not limited only to the following Examples.

### [Provision of Battery case]

A battery case was provided, which was composed of a box body including an opened upper surface, and included six cell chambers divided by partition walls therein. A width X of each of the cell chambers ([distance Xa between walls]-2×[height Ha of rib]) was 36.6 mm. In the present Examples, no ribs were provided on the partition walls and an inner wall surface of the battery case facing the partition walls, and the width X of the cell chamber was measured at a height of ±3 mm from the boundary between a negative electrode active material filling portion of a negative electrode plate placed on the outermost side of an electrode plate group accommodated in the battery case and a frame portion located on the ear portion side of a current collector included in the negative electrode plate.

### [Production of Bag-Like Separator]

A separator (made of polyethylene, thickness T of base portion: 0.25 mm, height H of rib: 0.50 mm) was provided, which was composed of a micro-porous sheet, included a plurality of linear ribs on one surface, and had a predetermined size length, and the separator was bent into a U-shape near a center in a longitudinal direction on a surface of the separator on which no ribs were provided, to obtain a stacking sheet. Then, both side portions of the stacking sheet were subjected to mechanical sealing to obtain a bag-like separator A. A separator B (thickness T of base portion: 0.25 mm, height H of rib: 0.55 mm), a separator C (thickness T of base portion: 0.25 mm, height H of rib: 0.65 mm), and a separator D (thickness T of base portion: 0.20 mm, height H of rib: 0.35 mm), which were the same as the above separator except that the height of a rib was different, were provided, and bag-like separators B, C, and D was obtained likewise.

### (Example 1)

### [Production of Current Collector]

An expanded lattice body (current collector) was produced by subjecting a rolled sheet made of a lead alloy to expanding processing. In this case, an ear portion was provided on one end of the current collector such that a shortest distance a from the center of the current collector in a longitudinal direction was set to 6.0 mm.

### [Production of Electrode Plate]

Lead powder, red lead (Pb₃O₄), an additive agent, and water were mixed and kneaded, and further kneaded while dilute sulfuric acid was added little by little, to produce a positive electrode active material paste. Similarly, lead powder, an additive agent, and water were mixed and kneaded, and further kneaded while dilute sulfuric acid was added little by little, to produce a negative electrode active material paste. Then, the current collectors were filled with the positive electrode active material paste and the negative electrode active material paste, and aged under an atmosphere of a temperature of 50°C and a humidity of 98% for 24 hours. Then, the current collectors were dried to obtain an unformed positive electrode plate and an unformed negative electrode plate.

### [Production of Electrode Plate Group]

The unformed negative electrode plate was arranged in the bag-like separator A. Eight unformed negative electrode plates and seven unformed positive electrode plates inserted into the bag-like separator A were alternately stacked. Then, the ear portions of the electrode plates having the same polarity were welded to each other by a cast-on strap (COS) method, to produce an electrode plate group. A thickness Y2 of the electrode plate group was 35.9 mm.

### [Assembly of Battery]

An electrode group was accommodated in a cell chamber of a battery case, and a strap of the electrode plate and an electrode pole were connected via a connecting member, to assemble a 12 V battery (corresponding to a D23 size specified in JIS D 5301 N). When the electrode plate group was accommodated in the cell chamber of the battery case, pressure F of 6.5 N was applied to the electrode plate group in a direction perpendicular to an opening of the battery case, to press the electrode plate group into the cell chamber of the battery case. As the electrode pole, an electrode pole made of a lead alloy was used.

An electrolytic solution (dilute sulfuric acid) was injected into the battery, and the electrode plate group was then formed under conditions of a flowing current of 18.6 A for 18 hours in a water tank at 35°C, to obtain a liquid type lead storage battery. A thickness Y1 of the electrode plate group after formation was 35.9 mm. In the present Examples, the thickness Y1 of the electrode plate group after formation was measured after the electrode plate group was taken out from the battery after formation and washed with water for 1 hour, and the electrode plate group from which the electrolytic solution was removed was sufficiently dried in a system in which no oxygen was present.

### (Example 2)

A lead storage battery was produced in the same manner as in Example 1 except that a bag-like separator B was used as a separator, and a thickness Y2 of an unformed electrode plate group and a thickness Y1 of the electrode plate group after formation were adjusted to 36.7 mm. Pressure F applied to the electrode plate group in a direction perpendicular to an opening of a battery case when the electrode plate group was accommodated in a cell chamber was 9.5 N.

### (Example 3)

A lead storage battery was produced in the same manner as in Example 1 except that the thicknesses of a positive electrode plate and a negative electrode plate were changed; a bag-like separator C was used as a separator; and a thickness Y2 of an unformed electrode plate group and a thickness Y1 of the electrode plate group after formation were adjusted to 36.6 mm. Pressure F applied to the electrode plate group in a direction perpendicular to an opening of a battery case when the electrode plate group was accommodated in a cell chamber was 11.0 N.

### (Example 4)

A lead storage battery was produced in the same manner as in Example 1 except that the thicknesses of a positive electrode plate and a negative electrode plate were changed; a bag-like separator C was used as a separator; and a thickness Y2 of an unformed electrode plate group and a thickness Y1 of the electrode plate group after formation were adjusted to 37.5 mm. Pressure F applied to the electrode plate group in a direction perpendicular to an opening of a battery case when the electrode plate group was accommodated in a cell chamber was more than 11.0 N.

### (Example 5)

A lead storage battery was produced in the same manner as in Example 1 except that a bag-like separator C was used as a separator, and a thickness Y2 of an unformed electrode plate group and a thickness Y1 of the electrode plate group after formation were adjusted to 38.3 mm. Pressure F applied to the electrode plate group in a direction perpendicular to an opening of a battery case when the electrode plate group was accommodated in a cell chamber was more than 11.0 N.

### (Example 6)

A lead storage battery was produced in the same manner as in Example 1 except that the thicknesses of a positive electrode plate and a negative electrode plate was changed; a glass mat (trade name: SSP2, manufactured by Nippon Sheet Glass Co., Ltd., thickness: 0.20 mm) was arranged as a spacer between a bag-like separator in which an unformed negative electrode plate was placed and an unformed positive electrode plate; a bag-like separator D was used as a separator; and a thickness Y2 of an unformed electrode plate group and a thickness Y1 of the electrode plate group after formation were adjusted to 35.9 mm. Pressure F applied to the electrode plate group in a direction perpendicular to an opening of a battery case when the electrode plate group was accommodated in a cell chamber was 6.5 N.

### (Comparative Example 1)

A lead storage battery was produced in the same manner as in Example 1 except that the thicknesses of a positive electrode plate and a negative electrode plate were changed; a bag-like separator B was used as a separator; and a thickness Y2 of an unformed electrode plate group and a thickness Y1 of the electrode plate group after formation were adjusted to 35.0 mm. Pressure F applied to the electrode plate group in a direction perpendicular to an opening of a battery case when the electrode plate group was accommodated in a cell chamber was 3.5 N.

### <Measurement of Resonant Frequency and Maximum Acceleration>

Vibration was applied to the 12 V battery (corresponding to a D23 size specified in JIS D 5301) before the electrolytic solution obtained in the assembling step of the battery was injected in Examples and Comparative Examples in the stacking direction of the electrode plate (the thickness direction of the electrode plate group), to measure a resonant frequency and maximum acceleration of the electrode pole. The measurement was performed using a random vibration control system (i230-/SA2M), and a frequency providing the maximum acceleration when the battery was vibrated at an acceleration of 1 G in a frequency band of 10 to 100 Hz was taken as a resonant frequency. The results are shown in Table 1.

### <Vibration Test>

The lead storage batteries of Examples and Comparative Examples were subjected to a vibration test. Specifically, the lead storage battery was vibrated in the stacking direction of the electrode plate (the thickness direction of the electrode plate group) under the following conditions. The vibration test was performed multiple times by changing the number of vibration.

### [Conditions]

Test device: random vibration control system (i230-/SA2M) (trade name, manufactured by IMV Corporation)
Numbers of vibration: 24.0 Hz, 37.5 Hz, 39.5 Hz, 45.5 Hz, 51.0 Hz
Vibration time at each of the numbers of vibration: 1200 minutes

A lid of the lead storage battery after the test was removed, and the presence or absence of the occurrence of damage of the electrode pole in the lead storage battery after the test was visually confirmed. A case where no damage occurred in the electrode pole at each of the numbers of vibration was taken as A; a case where cracks occurred in the electrode pole at any of the numbers of vibration was taken as B; and a case where the electrode pole fractured at any of the numbers of vibration was taken as C. The results are shown in Table 1.

**[Table 1]**

| | | | | | | Evaluation |
|---|---|---|---|---|---|---|
| | Pressure F (N) | Clearance (mm) | Spacer | Resonant frequency (Hz) | Maximum acceleration (G) | Vibration test |
| Example 1 | 6.5 | 0.7 | Absence | 39.5 | 5.5 | A |
| Example 2 | 9.5 | -0.1 | Absence | 45.5 | 4.1 | A |
| Example 3 | 11 | 0 | Absence | - | - | A |
| Example 4 | >11.0 | -0.9 | Absence | 51.0 | 5.0 | A |
| Example 5 | >11.0 | -1.7 | Absence | - | - | A |
| Example 6 | 6.5 | 0.7 | Presence | 39.5 | 5.5 | A |
| Comparative Example 1 | 3.5 | 1.6 | Absence | 37.5 | 3.6 | c |

### Reference Signs List

1: lead storage battery, 2: battery case, 3: lid, 4: electrode plate group; 5: electrode pole, 6: electrode terminal, 7: liquid vent plug, 8: electrode plate, 9, 90: separator, 10: spacer, 11: electrode active material filling portion, 12: current collector, 13: ear portion, 14: strap, 15: inter-cell connection portion, 16: connecting member, 22: cell chamber, X: width of cell chamber, Y1, Y2: thickness of electrode plate group

## Claims

1. A lead storage battery comprising:
a battery case comprising a cell chamber and comprising an upper surface having an opening;
a lid comprising an electrode terminal and closing the opening;
an electrode plate group accommodated in the cell chamber, and comprising a plurality of electrode plates and a strap connecting the electrode plates having the same polarity among the plurality of electrode plates to each other; and
an electrode pole extending in the battery case from the lid, and electrically connecting the strap to the electrode terminal,
wherein a clearance (X-Y1) being a difference between a width X of the cell chamber and a thickness Y1 of the electrode plate group in a stacking direction of the plurality of electrode plates is less than 1.2 mm.

2. The lead storage battery according to claim 1, wherein the clearance (X-Y1) is 0.7 mm or less.

3. The lead storage battery according to claim 1 or 2, wherein a resonant frequency of the electrode pole when the lead storage battery is vibrated in the stacking direction of the plurality of electrode plates is 38 Hz or more.

4. The lead storage battery according to any one of claims 1 to 3, wherein maximum acceleration of the electrode pole when the lead storage battery is vibrated by applying an acceleration of 1 G in the stacking direction of the plurality of electrode plates is 5.5 G or less.

5. The lead storage battery according to any one of claims 1 to 4, wherein the electrode plate group comprises a sheet-shaped spacer between adjacent electrode plates.

6. The lead storage battery according to any one of claims 1 to 5, wherein the electrode plate group is configured such that pressurization at 1.0 N or more is required in a direction perpendicular to the opening of the battery case when the electrode plate group is inserted into the cell chamber.

7. A method for producing a lead storage battery, comprising:
a step of providing a battery case comprising a cell chamber and comprising an upper surface having an opening;
a step of providing an electrode plate group comprising a plurality of electrode plates and a strap connecting the electrode plates having the same polarity among the plurality of electrode plates to each other;
a step of providing a lid comprising an electrode terminal;
a step of accommodating the electrode plate group in the cell chamber; and
a step of electrically connecting the strap to the electrode terminal via an electrode pole,
wherein a clearance (X-Y2) being a difference between a width X of the cell chamber and a thickness Y2 of the electrode plate group in a stacking direction of the plurality of electrode plates is less than 1.2 mm.

8. The method for producing a lead storage battery according to claim 7, wherein the electrode plate group is pressed into the cell chamber by applying a pressure of 1.0 N or more to the electrode plate group in a direction perpendicular to the opening of the battery case when the electrode plate group is accommodated in the cell chamber.

9. The method for producing a lead storage battery according to claim 7 or 8, wherein the clearance (X-Y2) is 0.7 mm or less.

10. The method for producing a lead storage battery according to any one of claims 7 to 9, wherein a resonant frequency of the electrode pole when the lead storage battery is vibrated in the stacking direction of the plurality of electrode plates is 38 Hz or more.

11. The method for producing a lead storage battery according to any one of claims 7 to 10, wherein maximum acceleration of the electrode pole when the lead storage battery is vibrated by applying an acceleration of 1 G in the stacking direction of the plurality of electrode plates is 5.5 G or less.

12. The method for producing a lead storage battery according to any one of claims 7 to 11, wherein the electrode plate group includes a sheet-shaped spacer between adjacent electrode plates.
